# FASCICULE DE BREVET EUROPEEN

(11) **EP 3 106 335 B1**
(45) Date de publication et mention de la délivrance du brevet: **20.12.2017**
(21) Numéro de dépôt: 16175472.6
(22) Date de dépôt: 23.06.2004
(51) Int. Cl.: B60J 10/18, B29C 70/76, B29C 45/14, B60J 10/82, B60J 10/70

(54) **VITRAGE COMPRENANT UN ELEMENT DE RENFORT ET SON PROCEDE DE FABRICATION**
VERSTÄRKUNGSELEMENT UMFASSENDE VERGLASUNG UND VERFAHREN ZUR DESSEN HERSTELLUNG
GLAZING COMPRISING A REINFORCEMENT ELEMENT AND PROCESS FOR ITS FABRICATION

(30) Priorité: 01.07.2003 FR 0350282
(43) Date de publication de la demande: 21.12.2016
(62) Demande divisionnaire de: 04767416.3
(73) Titulaire: Saint-Gobain Glass France, 92400 Courbevoie (FR)
(72) Inventeur: BORDEAUX, Frédéric, 78100 SAINT GERMAIN EN LAYE (FR); GAY, Sophia, 60150 MONTMACQ (FR)
(74) Mandataire: Saint-Gobain Recherche

(56) Documents cités:
- DE-C1- 19 923 725
- FR-A- 2 814 705
- US-A- 5 772 822
- US-A1- 2002 021 032
- US-A1- 2003 085 595

## Description

La présente invention porte sur un vitrage comprenant un élément vitré muni d'un cadre ou d'éléments périphériques de renforcement.

Un exemple particulier de vitrages de ce type est constitué par les vitrages automobiles, notamment les toits vitrés, ouvrants ou fixes, montés sur les automobiles.

De tels vitrages comprennent actuellement souvent un cadre ou des éléments de cadre en matière plastique assurant une fonction esthétique, de montage, d'intégration d'accessoires. Ils comprennent généralement un cadre ou des éléments de renforcement, généralement métalliques, améliorant leur rigidité.

Ces éléments de renforcement peuvent être soit d'une seule pièce, soit constitués d'inserts disjoints, à savoir, pour un toit, un insert avant, un insert arrière et éventuellement deux inserts de côté.

De façon générale, ces éléments peuvent être soit collés directement, soit enrobés selon une technique d'encapsulation ou de surmoulage par injection de la matière plastique dans le moule contenant les éléments de renfort mis en place. De manière générale, la matière plastique est du polyuréthanne, mais elle peut également être du thermoplastique.

Le verre actuellement employé pour les toits ouvrants est un verre monolithique trempé ayant généralement une épaisseur de 4 à 5 mm.

Ce verre a une résistance mécanique suffisante pour résister aux contraintes thermiques et mécaniques du procédé de surmoulage.

La tendance actuelle dans l'automobile est de promouvoir le verre feuilleté, qui présente des propriétés avantageuses de résistance aux chocs, en cas d'accident ou à l'effraction, une meilleure acoustique en filtrant les bruits extérieurs, un bon filtre aux ultraviolets, en permettant en outre l'adjonction d'antennes, de moyens de chauffage ...

Cependant, ce verre constitué avec deux feuilles de verre plus fin et moins précontraint que le verre trempé ne résiste pas suffisamment aux contraintes du procédé de surmoulage avec des inserts métalliques de renforcement, conduisant à un taux de rebut important. En outre, parmi les vitrages feuilletés qui sortent intacts de l'opération de surmoulage, plusieurs présentent des défauts de résistance à l'état monté dans le véhicule en cours d'utilisation, le toit étant soumis à des contraintes lorsque le véhicule se déplace ainsi qu'à de fortes variations de températures, par exemple lorsque le véhicule stationne au soleil, ou par un grand froid.

Une solution est d'utiliser une épaisseur de verre feuilleté suffisante pour que le verre soit résistant. Par exemple un verre feuilleté dont chaque feuille a une épaisseur de 2,8 à 3 mm peut être utilisé. Cette solution présente cependant l'inconvénient de ne pas répondre au critère de légèreté et ne peut être utilisée sur tous les véhicules.

La présente invention vise à fournir une solution pour le renforcement de vitrages surmoulés qui soit compatible avec tous les types de vitrage, y compris ceux de précontrainte relativement faible.

Les éléments de renfort de l'état antérieur de la technique sont constitués d'un profilé comportant une âme qui porte une partie saillante, la partie saillante pouvant avoir une forme en V ou en U et apportant la rigidité au système.

L'art antérieur connaît à ce titre la demande de brevet français N° 2 814 705 qui divulgue le préambule de la revendication 1 et qui porte sur un vitrage comprenant un élément vitré incorporant au moins un élément rigide dans une pièce de surmoulage. L'élément rigide présenté sur les figures présente en coupe transversale sensiblement la forme d'un V couché dont l'une des ailes, positionnée sensiblement parallèle à la face principale de l'élément vitré, forme une partie d'âme et dont l'autre aile forme une partie saillante, distale par rapport à l'élément vitré. Cette partie saillante réalise ainsi une poche remplie par exemple de matière de surmoulage et s'ouvrant vers l'élément vitré puisque l'angle entre les deux ailes est inférieur à 90°.

L'art antérieur connaît également la demande de brevet américain N° US 2003/085595 qui porte sur un vitrage comprenant un élément vitré muni d'un cadre périphérique incorporant un insert lié à ce dernier par une matière plastique de surmoulage.

Chaque insert présente en coupe transversale sensiblement la forme d'un U dont les parois latérales sont prolongées vers l'extérieur par rapport à la cavité du U, sensiblement parallèlement à la base du U. Chaque prolongement de partie saillante forme ainsi une poche entre cette partie saillante et l'élément vitré.

La matière de surmoulage n'est pas en contact avec la base du U car un joint périphérique principal est positionné dans la cavité du U avant le surmoulage de la matière. La masse de surmoulage n'est pas non plus en contact avec la partie saillante intérieure ; elle ne s'étend que sur la surface de bord extérieur de l'insert métallique.

La matière de surmoulage rempli ainsi une poche formée sous le prolongement de la partie saillante extérieure et s'ouvrant vers l'élément vitré.

Il a maintenant été découvert que lorsque de la matière de surmoulage est confinée dans une poche constituée par une concavité du profilé tournée vers l'élément vitré, la matière de surmoulage va être amenée en fonction de la température à se dilater ou se contracter dans la direction de l'élément vitré et ainsi à le casser si la contrainte exercée par le cadre de renforcement dépasse la précontrainte de l'élément vitré.

L'invention porte donc sur un nouveau vitrage selon la revendication 1 dont le but est de ne pas permettre un tel phénomène, ainsi que sur un procédé de fabrication de ce vitrage, selon la revendication 18. Ce vitrage comprend un élément vitré muni d'un cadre périphérique ou d'éléments périphériques en matière plastique surmoulée sur ledit élément vitré, ledit cadre ou lesdits éléments périphériques incorporant au moins un élément de renfort de l'élément vitré lié au(x)dit(s) cadre ou éléments périphérique(s) par une matière plastique de surmoulage. Ce cadre est constitué par un profilé comportant une partie d'âme qui est disposée parallèlement ou sensiblement parallèlement à la face principale de l'élément vitré, à proximité de l'élément vitré. Cette partie d'âme porte au moins une partie saillante distale par rapport à l'élément vitré, formant une poche.

Selon l'invention, la poche formée par la ou les parties saillantes ne s'ouvre pas en direction de l'élément vitré, c'est-à-dire que lorsque la matière de surmoulage, et particulièrement la matière contenue dans la poche, se dilate, elle va être amenée à se répandre selon une direction et un sens qui ne sont pas orientés vers l'élément vitré. En ce sens, on peut dire que la ou les parties saillantes ne forme(nt) pas de poche ouverte en direction de l'élément vitré.

Ainsi, le profil de l'élément de renforcement ne contient pas de matière plastique qui soit autorisée à se dilater ou se contracter en direction ou à partir de l'élément vitré, et à transmettre à ce dernier une contrainte supérieure à celle qui conduirait à la rupture de l'élément vitré dans les conditions de surmoulage et dans les conditions prévues d'utilisation dudit vitrage.

Dans la présente demande, « sensiblement parallèle » signifie que la partie d'âme peut être légèrement inclinée par rapport à la surface de l'élément vitré, par exemple d'un angle égal ou inférieur à 5°.

La ou les parties saillantes peuvent s'étendre de façon continue sur toute la longueur de l'élément de renfort ou bien l'élément de renfort peut comprendre une succession de portions saillantes d'étendue limitée.

Selon un premier mode de réalisation, l'élément de renfort comporte une âme et une ou deux ailes latérales, l'âme se situant en regard de l'élément vitré, chaque aile constituant une partie saillante portée par l'âme.

En particulier, selon un mode de réalisation qui ne fait pas partie de la présente invention, le profilé peut être un profilé en U, avec la concavité du U tournée à l'opposé de l'élément vitré.

Egalement, selon un mode de réalisation qui ne fait pas partie de la présente invention, le profilé peut comporter deux ailes latérales, dont l'une au moins est repliée vers l'autre, notamment d'équerre, à l'extrémité du profilé, les angles du profilé pouvant être arrondis.

Conformément à une autre variante de ce mode de réalisation, qui ne fait pas partie de la présente invention, l'élément de renfort est un profilé essentiellement en L, dont l'une des branches fait office d'âme et l'autre, de partie saillante.

La branche faisant office de partie d'âme est, de préférence, plus longue que la branche faisant office de partie saillante.

Selon une autre variante, qui ne fait pas partie de la présente invention, les deux ailes sont réunies le long ou à faible distance (typiquement quelques millimètres) de leurs bordures libres par une lame parallèle ou inclinée par rapport à la partie d'âme, le cas échéant en continuité de surface avec la partie d'âme. Les ailes sont de préférence réunies par une lame continue sur toute la longueur de l'élément de renfort, mais peuvent aussi l'être par une pluralité de lames distantes (voire très distantes) les unes des autres. Le profilé peut être formé par une bande de matière repliée trois fois d'équerre. Conformément à l'invention, le profilé comporte une aile latérale pouvant être repliée au moins une fois à son extrémité libre vers l'intérieur, l'extrémité repliée de l'aile pouvant venir en contact avec l'âme en tout point de celle-ci. En particulier, l'aile latérale peut être repliée sur elle-même en épingle à cheveux ou encore être repliée une ou deux fois d'équerre.

La région interne au profilé peut être remplie par de la matière de surmoulage, mais celle-ci n'est pas susceptible d'exercer une quelconque contrainte sur l'élément vitré.

Selon un second mode de réalisation, qui ne fait pas partie de la présente invention, l'élément de renfort est un profilé essentiellement en T, dont la base constitue la partie d'âme et le jambage la partie saillante, la partie d'âme se situant en regard de l'élément vitré.

L'invention permet l'utilisation pour l'élément de renfort de tous matériaux, quel que soit son coefficient de dilatation thermique linéaire, notamment les matériaux ayant un coefficient de dilatation thermique linéaire au moins égal voire supérieur à 10⁻⁵/°C et notamment supérieur à celui du verre, en particulier au moins égal à 12x10⁻⁶/°C.

Dans une autre variante, l'élément de renfort de tous matériaux présente un coefficient de dilatation thermique linéaire inférieur à 8x10⁻⁶/°C.

Conformément à l'invention, l'élément de renfort peut être un élément métallique, tel que l'acier, ou un élément en matière plastique composite.

De façon préférée, l'élément de renfort a une épaisseur comprise entre 1,5 et 5 mm.

La matière plastique de surmoulage du vitrage selon l'invention est, de préférence, constituée par du polyuréthanne ou un thermoplastique, tel que le poly(chlorure de vinyle).

L'élément vitré du vitrage selon l'invention est, de préférence, constitué par un verre feuilleté, durci ou non, formé d'au moins deux feuilles de verre, avec interposition d'au moins une feuille de matière plastique entre deux feuilles adjacentes.

Le verre peut être revêtu de couches minces sur au moins une de ses faces. Le cas échéant dans un vitrage feuilleté, la ou les feuilles de matière plastique peuvent être revêtues de couches minces sur au moins une face.

De façon préférée, l'élément vitré est constitué par un verre feuilleté durci d'une épaisseur totale inférieure à 5 mm, voire inférieure à 4 mm

Conformément à l'invention, le vitrage peut consister en un vitrage d'automobile, notamment de toit ouvrant.

L'invention a enfin pour objet un procédé de surmoulage d'un cadre ou d'éléments périphériques en matière plastique sur un élément vitré, conformément à la revendication 18. Pour mieux illustrer l'objet de la présente invention, on va en décrire ci-après plusieurs modes de réalisation avec référence aux dessins annexés sur lesquels :
- la figure 1 est un diagramme illustrant les niveaux de contraintes résiduelles pour des plaques réalisées en différents verres ;
- la figure 2 est une vue en coupe transversale d'une partie arrière d'un toit ouvrant d'automobile montrant une partie de cadre comportant un élément de renfort de l'état antérieur de la technique ;
- les figures 3a et 3b sont des schémas illustrant deux positions d'un même élément de renfort, l'une (selon la figure 3a) ne répondant pas à la définition de l'invention et l'autre (selon la figure 3b) n'appartenant pas non plus à l'invention ;
- les figures 4a et 4b sont également des schémas illustrant deux positions d'un même élément de renfort, l'une (selon la figure 4a) ne répondant pas à la définition de l'invention et l'autre (selon la figure 4b) n'appartenant pas non plus à l'invention ;
- la figure 5 est un schéma illustrant un élément de renfort selon un mode de réalisation qui n'appartient pas à l'invention ;
- les figures 6 et 7 sont des schémas illustrant deux éléments de renfort de forme générale similaire, n'appartenant pas à l'invention ;
- les figures 8a et 8b sont des schémas illustrant deux éléments de renfort de forme générale similaire, mais dont seul celui représenté sur la figure 8b appartient à l'invention ;
- les figures 9a, 9b et 9c sont des schémas illustrant deux éléments de renfort de forme générale similaire, n'appartenant pas à l'invention ; et
- la figure 10 est un schéma illustrant un autre élément de renfort selon un mode de réalisation qui n'appartient pas à l'invention.

Les précontraintes résiduelles dans une plaque de verre sont de deux types : les deux surfaces présentent des précontraintes en compression et le coeur présente des précontraintes en extension.

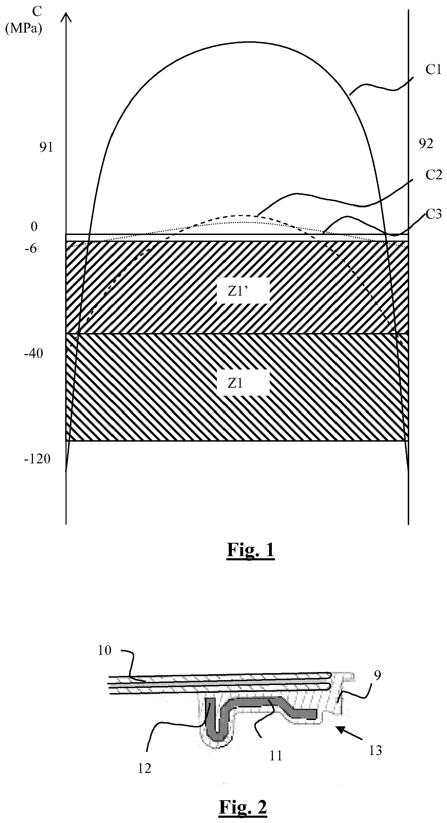

Le diagramme de la figure 1 illustre ces précontraintes pour trois types de verre, l'épaisseur de verre entre ses deux surfaces S1 et S2 apparaissant en abscisses, selon une échelle pas strictement linéaire afin de faciliter la lecture et les valeurs des contraintes C, exprimées en MPa, en ordonnées :
- la courbe C1 correspond à un verre trempé d'une épaisseur de 4 à 5 mm ; on peut observer que ce verre supporte des contraintes jusqu'à environ -120 MPa ;
- la courbe C2 correspond à un verre feuilleté bombé, fabriqué selon le procédé dit « two passes forming » ou « verre à verre » ou « un à un », chaque feuille de verre ayant une épaisseur de 1,6 mm ; on peut constater que ce verre supporte des contraintes d'environ -30 MPa ; selon l'épaisseur du verre feuilleté, ce dernier peut supporter des contraintes jusqu'à environ -30 voire -50 MPa ;
- la courbe C3 correspond à un verre feuilleté bombé fabriqué selon le procédé dit « windshield bending » ou « bi-verre » où deux feuilles de verre sont bombées simultanément ; ce verre supporte jusqu'à environ -6 MPa de contrainte seulement.

Sur le diagramme de la figure 1, on a également représenté schématiquement suivant une zone Z1, les contraintes générées par le renfort de l'état antérieur de la technique selon la figure 2, et suivant une zone Z1', celles générées par les renforts de la présente invention. De telles contraintes sont générées aussi bien lors de l'encapsulation que lors de l'utilisation. On constate que les renforts de la présente invention permettent de façon nouvelle l'utilisation de verres feuilletés pour fabriquer des toits ouvrants d'automobiles, sans risque de casse au moulage, ni en utilisation.

Sur la figure 2, on a représenté en coupe une partie d'un vitrage de toit ouvrant, équipé des éléments de renfort de l'état antérieur de la technique.

Les éléments de renfort 13 encapsulés dans une matière plastique de surmoulage 9 telle que le polyuréthanne ont une partie sensiblement plane et sensiblement parallèle à l'élément vitré 10 du toit ouvrant, appelée partie d'âme 11, et une partie saillante 12. L'âme 11 est la partie adjacente au verre et la partie saillante 12 qui permet de renforcer la structure de l'élément de cadre est constituée par un repli de la bordure interne de l'âme 11 suivant un U ouvert vers l'élément vitré 10.

C'est généralement la partie d'élément vitré qui fait face au U ouvert de la partie saillante 12 qui subit une casse. Pour fixer les idées, dans un procédé d'encapsulation PU-RIM qui génère des températures de l'ordre de 120°C, entre 80 et 90% des verres feuilletés selon le procédé dit de « Windshield bending » et entre 10 à 40% des verres feuilletés selon le procédé dit de « verre à verre » sont cassés lors du procédé d'encapsulation, pour une épaisseur de verres unitaires de 1,6 à 2,1 mm.

Le pourcentage de casse diminue lorsque l'épaisseur des feuilles de verre augmente.

On a ainsi constaté que pour utiliser les éléments de renfort de l'état antérieur de la technique, il est nécessaire d'utiliser des feuilles de verre ayant une épaisseur d'au moins 2,8 mm et de préférence supérieure à 3 mm.

Cependant, une telle épaisseur de verre est rarement acceptée par les constructeurs d'automobiles.

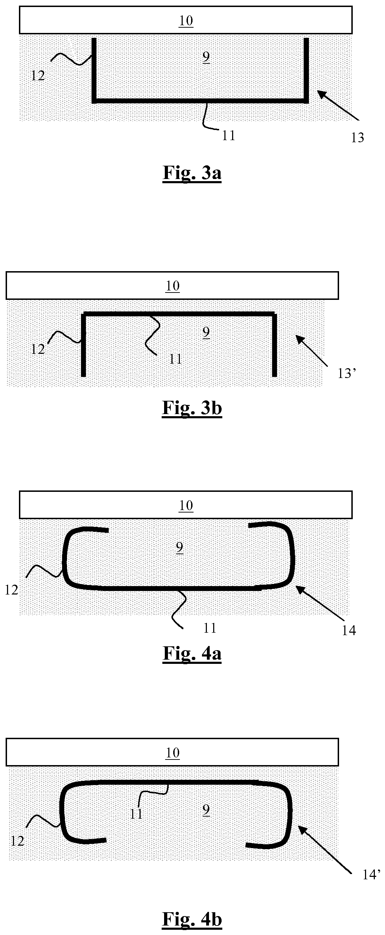

Sur les figures 3a et 3b, on a représenté le même élément de renfort 13, 13' : un profilé présentant en coupe transversale une forme de U.

Sur la figure 3a, le profilé est positionné selon l'état antérieur de la technique, l'âme 11 du profilé, c'est-à-dire la base du U étant placée au fond du moule, à l'opposé de l'élément vitré et les deux ailes étant disposées perpendiculairement à l'élément vitré.

Dans cette disposition, une masse importante de matière plastique de surmoulage 9 est confinée entre l'élément de renfort 13 et l'élément vitré 10. Sous l'effet de la chaleur, la matière plastique de surmoulage se dilate considérablement mais ne peut pas le faire dans la direction de l'âme 11 car l'élément de renfort 13 l'en empêche.

C'est donc dans la direction de l'élément vitré 10 que la matière de surmoulage va se dilater, exerçant une forte pression sur celui-ci, jusqu'à le casser.

Sur la figure 3b, la quantité de matière de surmoulage 9 confinée entre l'élément de renfort 13' et l'élément vitré 10 est faible. L'essentiel de la matière de surmoulage 9 peut se dilater dans la direction opposée à celle de l'élément vitré 10, et ne peut ainsi pas exercer de contrainte à son égard.

Sur les figures 4a et 4b, on a représenté un autre élément de renfort, respectivement 14, 14', comportant une âme et deux ailes latérales situées aux extrémités de l'âme et repliées d'équerre l'une vers l'autre à leurs extrémités libres.

De même que pour les figures 3a et 3b, on peut noter que seule la disposition de l'élément de renfort 14' représentée sur la figure 4b empêche la matière de surmoulage de se dilater dans la direction de l'élément vitré 10 alors que l'élément de renfort 14 représenté sur la figure 4a gêne la dilatation de la matière de surmoulage 9.

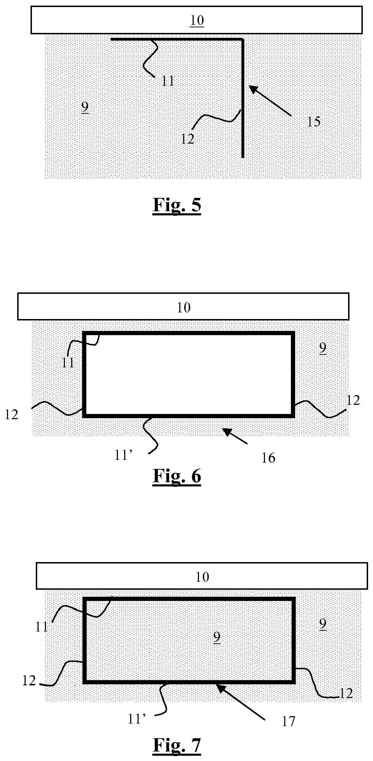

Sur la figure 5 on a représenté un autre élément de renfort 15, un profilé en L. L'âme 11 du profilé étant disposée le long de l'élément vitré, la matière de surmoulage ne se dilatera pas dans la direction de celui-ci. On peut noter que l'âme 11 est plus longue que la partie saillante 12.

Sur les figures 6 et 7, on a représenté respectivement un élément de renfort 16, 17. L'élément de renfort 16, 17 possède deux ailes latérales réunies le long de leurs bordures libres par une lame 11' parallèle à la partie d'âme 11. Le profilé a ainsi en coupe transversale la forme générale d'un rectangle.

L'élément de renfort 17 représenté sur la figure 7 diffère de celui de la figure 6 par le fait qu'il est rempli de la matière de surmoulage 9. Dans les deux cas, la matière de surmoulage ne se dilatera pas dans la direction de l'élément vitré 10.

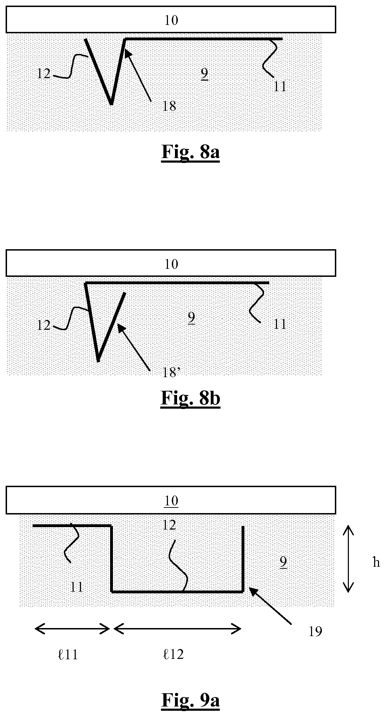

Sur les figures 8a et 8b, on a représenté deux éléments de renfort 18, 18' de forme générale similaire. L'élément de renfort 18 de la figure 8a correspond à l'élément de renfort représenté sur la figure 2 de l'état antérieur de la technique.

Les deux éléments de renfort 18, 18' sont constitués d'une âme 11, disposée le long de l'élément vitré 10, et d'une partie saillante 12 repliée en épingle à cheveux.

Cependant, la partie saillante 12 de l'élément de renfort de la figure 8a est repliée vers l'extérieur, confinant ainsi de la matière de surmoulage entre l'élément de renfort 18 et l'élément vitré 10.

Sur la Figure 8b, conformément à l'invention, on peut noter que la partie saillante 12 de l'élément de renfort 18' est repliée vers l'intérieur, confinant de la matière plastique de surmoulage 9 en son sein, et l'empêchant de se dilater en direction de l'élément vitré 10.

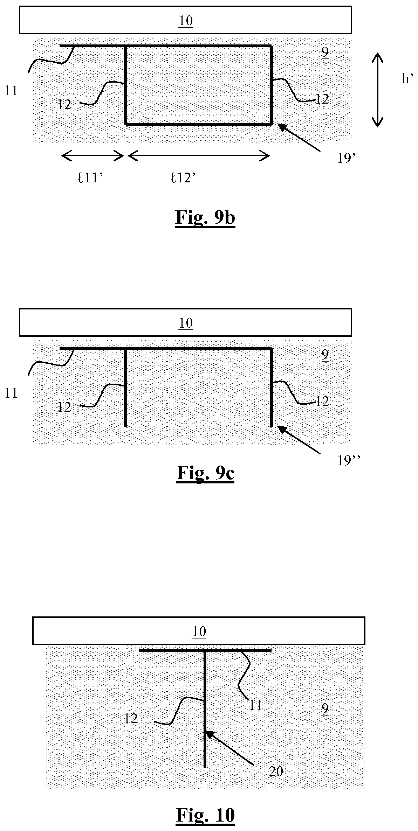

Sur les figures 9a, 9b et 9c, on a représenté trois éléments de renfort 19, 19' et 19" de forme générale similaire, constitués d'une âme 11, disposée le long de l'élément vitré 10, et de plusieurs parties saillantes 12.

Cependant, sur la figure 9a, les parties saillantes 12 forment en coupe transversale un U ouvert vers l'élément vitré 10 et on peut noter qu'une masse importante de matière plastique de surmoulage 9 est confinée entre l'élément de renfort 19 et l'élément vitré 10, ce qui n'est pas le cas avec les éléments de renfort représenté sur les figures 9b et 9c. Sur la figure 9b, l'âme 11 referme le U formé par les parties saillantes 12 et sur la figure 9c, les parties saillantes 12 forment en coupe transversale un U ouvert à l'opposé de l'élément vitré 10.

Sur la figure 10, on a représenté un élément de renfort 20 dont le profilé a en coupe transversale la forme générale d'un T, la barre transversale du T étant placée le long de l'élément vitré et étant munie de préférence à ses extrémités d'un petit retour orienté à l'opposé de l'élément vitré, empêchant la matière plastique de surmoulage 9 de se dilater dans la direction de l'élément vitré 10.

Des vitrages selon l'invention et selon l'état antérieur de la technique ont été testés afin de montrer la performance des vitrages selon l'invention.

On a tout d'abord évalué le comportement des vitrages face aux contraintes qui apparaissent essentiellement lors du procédé de fabrication par encapsulation, et on a soumis les vitrages à des essais qui consistaient à soumettre le vitrage à différentes contraintes, lesquelles apparaissent lors d'une montée de température, lors d'une baisse de température ou lorsque le vitrage est soumis à une charge.

Les matériaux utilisés pour les différents essais ont les caractéristiques suivantes :

| | Elément vitré | Matière de surmoulage : polyuréthanne | Elément de renfort : acier |
|---|---|---|---|
| Masse volumique (kg.m⁻³) | 2500 | 1050 | 7800 |
| Module d'Young (GPa) | 71 | 30 à 20°C 17,5 à 80°C | 210 |
| Coefficient de Poisson | 0,22 | 0,4 | 0,3 |
| Conductivité (J.m⁻¹.K⁻¹) | 1,26 | 0,12 | 36,5 |
| Chaleur spécifique (J.kg⁻¹.K⁻¹) | 940 | 1872 | 460 |
| Coefficient de dilatation thermique (K⁻¹) | 9.10⁻⁶ | 165.10⁻⁶ | 12.10⁻⁶ |

Les vitrages testés ont les dimensions suivantes : largeur : 885 mm et longueur : 495 mm (de la partie de cadre avant à la partie de cadre arrière).

Seules les parties de cadre avant et arrière sont renforcées.

### Vitrage V (Comparatif)

Les éléments de renfort sont des profilés plats, sans partie saillante. Les dimensions de l'élément de renfort sont les suivantes :

| | |
|---|---|
| Partie de cadre avant : | 5 mm d'épaisseur |
| | 50 mm de largeur |
| Partie de cadre arrière : | 3 mm d'épaisseur |
| | 50 mm de largeur |

### Vitrage V1 (comparatif)

Les éléments de renfort sont des profilés selon la figure 9a, de dimensions : h = 9 mm, ℓ11 = 5 mm et ℓ12 = 30 mm. L'épaisseur de l'élément de renfort est de 1,5 mm.

### Vitrage V2 (comparatif)

Les éléments de renfort sont du même type que pour le Vitrage V1, mais ont une épaisseur de 5 mm.

### Vitrage V1'

Les éléments de renfort sont des profilés selon la figure 9b, de dimensions : h' = 9 mm, ℓ11' = 5 mm et ℓ12' = 30 mm. L'épaisseur de l'élément de renfort est de 1,5 mm.

### Vitrage V2'

Les éléments de renfort sont du même type que pour le vitrage V1', mais ont une épaisseur de 5 mm.

Dans les conditions de fabrication par encapsulation avec le polyuréthanne, on a mesuré les déplacements maximaux générés sur le verre par rapport à la forme initiale (galbe) du verre.

On note que la variation de galbe est plus limitée pour les vitrages V1, V1' et V2' par rapport à V, principalement parce que la rigidité des éléments de renfort des vitrages V1, V1' et V2' est accrue par rapport à celui du vitrage V (élément de renfort plat).

On observe une variation de galbe encore plus limitée pour les vitrages V1' et V2' par rapport au vitrage V1.

Cette tendance est respectée quelle que soit l'épaisseur de polyuréthanne qui se trouve entre le verre et l'élément de renfort.

Ceci témoigne que les éléments de renfort selon l'invention sont moins sujets à induire des casses par génération de contraintes sur le verre.

### Essai 1 : Cas d'évolution climatique (+20°C à +80°C)

Dans cet essai, on applique à chacun des vitrages une variation de température depuis 20°C jusqu'à 80°C.

Comme précédemment on mesure le déplacement maximal généré sur le verre.

On note que les vitrages selon l'invention ont un plus faible déplacement sur le verre que les vitrages de l'état antérieur de la technique.

Ici encore, cette tendance est respectée quelle que soit l'épaisseur de polyuréthanne qui se trouve entre le verre et l'élément de renfort.

### Essai 2 : Cas d'évolution climatique (+20°C à -40°C)

Des essais en conditions climatiques de refroidissement +20°C à -40°C ont été effectués sur les vitrages V, V1, V2, V1' et V2'. Dans ces essais, on mesure les contraintes générées sur le verre.

La diminution de température est le cycle le plus pénalisant, du point de vue du changement de caractéristiques, car c'est en diminuant la température qu'on augmente le module d'Young du polyuréthanne.

Les contraintes relevées pour chacun des vitrages (avec une épaisseur de polyuréthanne de 1,5 mm entre le verre et l'élément de renfort) sont reportées dans le tableau suivant :

| Vitrage | Contrainte (MPa) |
|---|---|
| V (en renfort avant) | 6 |
| V1 | 20 |
| V2 | 57 |
| V1' | 13 |
| V2' | 9 |

Il apparaît qu'en dehors du vitrage V, muni d'éléments de renfort plats (dont les propriétés de renforcement sont donc très limitées), les vitrages V1' et V2' selon l'invention permettent d'obtenir les meilleurs résultats, à savoir les plus faibles contraintes, dans la zone Z1'. Comme on peut le voir à la figure 1, ces contraintes restent dans un domaine de valeurs supportables par les vitrages feuilletés, alors que les contraintes générées par les éléments de renfort des vitrages V1 et V2 sont clairement incompatibles avec la résistance des vitrages feuilletés 2 par 2 et de la majorité des vitrages feuilletés 1 par 1.

### Essai 3 : Déplacement sous charge

Pour cet essai, les vitrages V, V1 et V1' ont été chargés sur une de leurs bandes (avant ou arrière), en leur milieu, avec un point d'appui simple à chaque angle. Une force de 100 N a été appliquée et le maximum des valeurs de déplacement a été relevé.

On note que le vitrage V1' selon l'invention présente d'excellentes propriétés de rigidité, car il présente une flèche moitié moindre de celle de V1 avec des contraintes générées divisées par 2.

Cette tendance est respectée quelle que soit l'épaisseur de polyuréthanne qui se trouve entre le verre et l'élément de renfort.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Vitrage comprenant un élément vitré (10) muni d'un cadre périphérique, ou d'éléments périphériques en matière plastique surmoulée sur ledit élément vitré (10), ledit cadre ou lesdits éléments périphériques incorporant au moins un élément de renfort de l'élément vitré (, 18',) lié au(x)dit(s) cadre ou éléments périphérique(s) par une matière plastique de surmoulage (9) et constitué par un profilé comportant une partie d'âme (11) qui est disposée parallèlement ou sensiblement parallèlement à proximité de l'élément vitré (10) et qui porte au moins une partie saillante (12) distale par rapport à l'élément vitré et formant une poche, la partie d'âme se situant en regard de l'élément vitré (10) avec de la matière plastique de surmoulage (9) entre l'élément de renfort et l'élément vitré (10), **caractérisé par le fait que** l'élément de renfort (18') comporte une aile latérale constituant une partie saillante (12) portée par la partie d'âme (11), ladite aile latérale étant repliée au moins une fois à son extrémité libre vers l'intérieur, l'extrémité repliée de l'aile pouvant venir en contact avec l'âme en tout point de celle-ci, la partie saillante (12) ne formant pas de poche ouverte en direction de l'élément vitré (10).

2. Vitrage selon la revendication 1, **caractérisé par le fait que** la partie saillante (12) s'étend de façon continue sur toute la longueur de l'élément de renfort (18').

3. Vitrage selon la revendication 1, **caractérisé par le fait que** l'élément de renfort (18') comprend longitudinalement une succession de parties saillantes d'étendue limitée.

4. Vitrage selon l'une quelconque des revendications 1 à 3, **caractérisé par le fait que** l'élément de renfort (18') comporte deux ailes latérales, chaque aile constituant une partie saillante (12) portée par la partie d'âme (11).

5. Vitrage selon l'une quelconque des revendications 1 à 4, **caractérisé par le fait que** l'aile latérale est repliée sur elle-même en épingle à cheveux.

6. Vitrage selon l'une quelconque des revendications 1 à 4, **caractérisé par le fait que** l'aile latérale est repliée une ou deux fois d'équerre.

7. Vitrage selon l'une quelconque des revendications 1 à 6, **caractérisé par le fait que** la région interne au profilé est remplie par de la matière de surmoulage (9), laquelle n'est pas susceptible d'exercer une quelconque contrainte sur l'élément vitré (10).

8. Vitrage selon l'une quelconque des revendications 1 à 7, **caractérisé par le fait que** le (ou les) élément(s) de renfort (18') présente(nt) un coefficient de dilatation thermique linéaire supérieur à 10⁻⁵/°C.

9. Vitrage selon l'une des revendications 1 à 7, **caractérisé par le fait que** le (ou les) élément(s) de renfort (18') présente un coefficient de dilatation thermique linéaire supérieur à celui du verre, en particulier au moins égal à 12x10⁻⁶/°C.

10. Vitrage selon l'une quelconque des revendications 1 à 7, **caractérisé par le fait que** le (ou les) élément(s) de renfort (18') présente(nt) un coefficient de dilatation thermique linéaire inférieur à 8.10⁻⁶/°C.

11. Vitrage selon l'une des revendications 1 à 10, **caractérisé par le fait que** le (ou les) élément(s) de renfort (18') est (ou sont) en matière métallique ou en matière plastique composite.

12. Vitrage selon l'une des revendications 1 à 5, **caractérisé par le fait que** le (ou les) élément(s) de renfort (18') présente(nt) une épaisseur comprise entre 1,5 et 5 mm.

13. Vitrage selon l'une des revendications 1 à 12, **caractérisé par le fait que** la matière plastique de surmoulage (9) est constituée par du polyuréthanne ou un thermoplastique, en particulier le poly(chlorure de vinyle).

14. Vitrage selon l'une des revendications 1 à 13, **caractérisé par le fait que** l'élément vitré (10) est constitué par un verre feuilleté, durci ou non, formé d'au moins deux feuilles de verre, avec interposition d'au moins une feuille de matière plastique entre deux feuilles adjacentes.

15. Vitrage selon la revendication 14, **caractérisé par le fait que** l'élément vitré (10) est constitué par un verre feuilleté durci d'une épaisseur totale inférieure à 5 mm.

16. Vitrage selon la revendication 14, **caractérisé par le fait que** l'élément vitré (10) est constitué par un verre feuilleté durci d'une épaisseur totale inférieure à 4 mm.

17. Vitrage selon l'une des revendications 1 à 16, **caractérisé par le fait qu'**il consiste en un vitrage d'automobile, notamment de toit ouvrant.

18. Procédé de surmoulage d'un cadre ou d'éléments périphériques en matière plastique sur un élément vitré (10) pour obtenir un vitrage selon la revendication 1, dans lequel on dispose dans au moins un élément de moule ayant une cavité de moulage un élément vitré (10) et au moins un élément de renfort (18') constitué par un profilé comportant une partie d'âme (11) et au moins une partie saillante (12) et formant une poche, la partie d'âme se situant en regard de l'élément vitré (10) avec de la matière plastique de surmoulage (9) entre l'élément de renfort et l'élément vitré (10), et on injecte la matière plastique dans la cavité de moulage.

## Patentansprüche

1. Verglasung, die ein Scheibenelement (10) umfasst, das mit einem umlaufenden Rahmen, oder umlaufenden Elementen aus Kunststoff versehen ist, die auf das Scheibenelement (10) aufgeformt sind, wobei der Rahmen oder die umlaufenden Elemente mindestens ein Element zur Verstärkung des Scheibenelements (18) enthalten, das mit dem umlaufenden Rahmen oder den umlaufenden Elementen durch einen Aufformkunststoff (9) verbunden ist und von einem Profil gebildet ist, das einen Kernteil (11) aufweist, der parallel oder im Wesentlichen parallel in der Nähe des Scheibenelements (10) angeordnet ist, und mindestens einen distalen, relativ zu dem Scheibenelement vorspringenden und eine Blase bildenden Teil (12) trägt, wobei sich der Kernteil dem Scheibenelement (10) zugewandt mit dem Aufformkunststoff (9) zwischen dem Verstärkungselement und dem Scheibenelement (10) befindet, **dadurch gekennzeichnet, dass** das Verstärkungselement (18') einen seitlichen Flügel aufweist, der einen vorspringenden Teil (12) bildet, der durch den Kernteil (11) getragen wird, wobei der seitliche Flügel wenigstens einmal an seinem freien Ende nach innen gebogen ist, wobei das gebogene Ende des Flügels mit dem Kernteil an jedem Punkt desselben in Kontakt kommen kann, wobei der vorspringende Teil (12) in Richtung des Scheibenelements (10) keine offene Blase bildet.

2. Verglasung nach Anspruch 1, **dadurch gekennzeichnet, dass** der vorspringende Teil (12) sich durchgängig über die gesamte Länge des Verstärkungselements (18') erstreckt.

3. Verglasung nach Anspruch 1, **dadurch gekennzeichnet, dass** das Verstärkungselement (18') in Längsrichtung eine Abfolge von vorspringenden Teilen mit begrenzter Ausdehnung umfasst.

4. Verglasung nach einem der Ansprüche 1 bis 3, **dadurch gekennzeichnet, dass** das Verstärkungselement (18') zwei seitliche Flügel umfasst, wobei jeder Flügel einen vorspringenden Teil (12) darstellt, der durch den Kernteil (11) getragen wird.

5. Verglasung nach einem der Ansprüche 1 bis 4, **dadurch gekennzeichnet, dass** der seitliche Flügel haarnadelförmig umgebogen ist.

6. Verglasung nach einem der Ansprüche 1 bis 4, **dadurch gekennzeichnet, dass** der seitliche Flügel ein- oder zweimal rechtwinklig gebogen ist.

7. Verglasung nach einem der Ansprüche 1 bis 6, **dadurch gekennzeichnet, dass** die Region im Inneren des Profils mit Aufformmaterial (9) gefüllt ist, das keine Belastung auf das Scheibenelement (10) ausüben kann.

8. Verglasung nach einem der Ansprüche 1 bis 7, **dadurch gekennzeichnet, dass** das oder die Verstärkungselement(e) (18') einen linearen Wärmeausdehnungskoeffizienten aufweist bzw. aufweisen, der größer als 10⁻⁵/°C ist.

9. Verglasung nach einem der Ansprüche 1 bis 7, **dadurch gekennzeichnet, dass** das oder die Verstärkungselement(e) (18') einen linearen Wärmeausdehnungskoeffizienten aufweist bzw. aufweisen, der größer als der von Glas ist, insbesondere mindestens gleich 12x10⁻⁶/°C.

10. Verglasung nach einem der Ansprüche 1 bis 7, **dadurch gekennzeichnet, dass** das oder die Verstärkungselement(e) (18') einen linearen Wärmeausdehnungskoeffizienten aufweist bzw. aufweisen, der kleiner als 8x10⁻⁶/°C ist.

11. Verglasung nach einem der Ansprüche 1 bis 10, **dadurch gekennzeichnet, dass** das oder die Verstärkungselement(e) (18') aus einem metallischen Material oder aus einem Verbundkunststoff ist bzw. sind.

12. Verglasung nach einem der Ansprüche 1 bis 5, **dadurch gekennzeichnet, dass** das oder die Verstärkungselement(e) (18') eine Dicke zwischen 1,5 und 5 mm aufweist bzw. aufweisen.

13. Verglasung nach einem der Ansprüche 1 bis 12, **dadurch gekennzeichnet, dass** der Aufformkunststoff (9) aus Polyurethan oder aus einem Thermoplast besteht, insbesondere Poly(vinylchlorid).

14. Verglasung nach einem der Ansprüche 1 bis 13, **dadurch gekennzeichnet, dass** das Scheibenelement (10) aus einem gehärteten oder nicht gehärteten Verbundglas besteht, das aus mindestens zwei Glasscheiben mit mindestens einer zwischen zwei benachbarten Scheiben eingelegten Kunststoffscheibe gebildet ist.

15. Verglasung nach Anspruch 14, **dadurch gekennzeichnet, dass** das Scheibenelement (10) aus einem gehärteten Verbundglas mit einer Gesamtdicke kleiner als 5 mm besteht.

16. Verglasung nach Anspruch 14, **dadurch gekennzeichnet, dass** das Scheibenelement (10) aus einem gehärteten Verbundglas mit einer Gesamtdicke kleiner als 4 mm besteht.

17. Verglasung nach einem der Ansprüche 1 bis 16, **dadurch gekennzeichnet, dass** sie in einer Verglasung für ein Kraftfahrzeug besteht, insbesondere einem Schiebedach.

18. Verfahren zum Aufformen eines Rahmens, oder von umlaufenden Elementen aus Kunststoff auf einem Scheibenelement (10) zum Herstellen einer Verglasung nach Anspruch 1, wobei in mindestens einem Formwerkzeugelement mit einer Formhöhlung ein Scheibenelement (10) und mindestens ein Verstärkungselement (18'), das von einem Profil gebildet ist, das einen Kernteil (11) und mindestens einen vorspringenden und eine Blase bildenden Teil (12) aufweist, wobei sich der Kernteil dem Scheibenelement (10) zugewandt mit dem Aufformkunststoff (9) zwischen dem Verstärkungselement und dem Scheibenelement (10) befindet, und der Kunststoff in die Formhöhlung eingespritzt wird.

## Claims

1. A glazing unit comprising a glazed element (10) provided with a peripheral frame, or with peripheral elements, made of plastic overmolded onto said glazed element (10), said peripheral frame or said peripheral elements incorporating at least one element (18') for reinforcing the glazed element, this reinforcing element being connected to said peripheral frame or said peripheral elements by an overmolding plastic (9) and consisting of a profile comprising a web part (11) that is arranged parallel or substantially parallel and close to the glazed element (10) and bears at least one projecting part (12) distal to the glazed element and forming a pocket, the web part being situated facing the glazed element (10) with overmolding plastic (9) between the element for reinforcing and the glazed element (10), **characterized in that** the reinforcing element (18') comprises one lateral arm constituting a projecting part (12) borne by the web part (11), said lateral arm being folded over inwardly at its free end at least once, the folded-over end of the arm being able to come into contact with the web at any point on the latter, the projecting part (12) does not form a pocket that is open in the direction of the glazed element (10) .

2. The glazing unit as claimed in claim 1, **characterized in that** the projecting part (12) extends continuously over the whole length of the reinforcing element (18').

3. The glazing unit as claimed in claim 1, **characterized in that** the reinforcing element (18') comprises, longitudinally, a succession of projecting parts of limited extent.

4. The glazing unit as claimed in any one of claims 1 to 3, **characterized in that** the reinforcing element (18') comprises two lateral arms, each arm constituting a projecting part (12) borne by the web part (11) .

5. The glazing unit as claimed in in any one of claims 1 to 4, **characterized in that** the lateral arm is folded over on itself in the manner of a hairpin.

6. The glazing unit as claimed in in any one of claims 1 to 4, **characterized in that** the lateral arm is folded over once or twice at a right angle.

7. The glazing unit as claimed in any one of claims 1 to 6, **characterized in that** the internal region of the profile is filled with overmolding material (9), which material is not capable of exerting any stress whatsoever on the glazed element (10).

8. The glazing unit as claimed in any one of claims 1 to 7, **characterized in that** the reinforcing element or elements (18') has or have a coefficient of linear thermal expansion of above 10⁻⁵/°C.

9. The glazing unit as claimed in one of claims 1 to 7, **characterized in that** the reinforcing element or elements (18') has or have a coefficient of linear thermal expansion of above that of the glass, in particular at least equal to 12×10⁻⁶/°C.

10. The glazing unit as claimed in any one of claims 1 to 7, **characterized in that** the reinforcing element or elements (18') has or have a coefficient of linear thermal expansion of below 8×10⁻⁶/°C.

11. The glazing unit as claimed in one of claims 1 to 10, **characterized in that** the reinforcing element or elements (18') is or are made of metal or composite plastic.

12. The glazing unit as claimed in one of claims 1 to 6, **characterized in that** the reinforcing element or elements (18') has or have a thickness of between 1.5 and 5 mm.

13. The glazing unit as claimed in one of claims 1 to 12, **characterized in that** the overmolding plastic (9) consists of polyurethane or a thermoplastic, in particular poly(vinyl chloride).

14. The glazing unit as claimed in one of claims 1 to 13, **characterized in that** the glazed element (10) consists of a laminated glass, which may or may not be hardened, formed from at least two sheets of glass, with interposition of at least one plastic sheet between two adjacent sheets.

15. The glazing unit as claimed in claim 14, **characterized in that** the glazed element (10) consists of a hardened laminated glass having a total thickness of below 5 mm.

16. The glazing unit as claimed in claim 14, **characterized in that** the glazed element (10) consists of a hardened laminated glass having a total thickness of below 4 mm.

17. The glazing unit as claimed in one of claims 1 to 16, **characterized in that** it consists of an automotive glazing unit, especially for a sunroof.

18. A method of overmolding a frame, or peripheral elements, made of plastic onto a glazed element (10) for obtaining a glazing according to claim 1, in which method there is arranged, in at least one mold element having a molding cavity, a glazed element (10) and at least one reinforcing element (18') consisting of a profile comprising a web part (11) and at least one projecting part (12) and forming a pocket, the web part being situated facing the glazed element (10) with overmolding plastic (9) between the element for reinforcing and the glazed element (10), and the plastic is injected into the molding cavity.
